# EUROPEAN PATENT SPECIFICATION

(11) **EP 4 520 658 B1**
(45) Date of publication and mention of the grant of the patent: **07.10.2026**
(21) Application number: 24191530.5
(22) Date of filing: 29.07.2024
(51) Int. Cl.: B64C 9/24, B64C 9/22

(54) **VARIABLE SLAT DISPLACEMENT USING SPANWISE ACTUATOR**
VARIABLE VORFLÜGELVERSCHIEBUNG MIT SPANNWEITIGEM AKTUATOR
DÉPLACEMENT VARIABLE DE LATTES À L'AIDE D'UN ACTIONNEUR DANS LE SENS DE L'ENVERGURE

(30) Priority: 07.09.2023 US 202318243328
(43) Date of publication of application: 12.03.2025
(73) Proprietor: The Boeing Company, Arlington, VA 22202 (US)
(72) Inventor: KAMILA, Eric S., Arlington, 22202 (US); BURIN, Ramon A., Arlington, 22202 (US); STANDLEY, John A., Arlington, 22202 (US)
(74) Representative: Lissandrini, Marco

(56) References cited:
- WO-A1-2012/099300
- DE-A1- 1 756 515
- US-A- 4 470 569

## Description

### Field

The present disclosure generally relates to aircraft wings, and more particularly, to an actuator that displaces a slat of an aircraft wing.

### Background

This background description is provided for the purpose of generally presenting the context of the disclosure. Unless otherwise indicated herein, material described in this section is neither expressly nor impliedly admitted to be prior art to the present disclosure or the appended claims.

In order to decrease the amount of drag associated with flying an aircraft, aircraft wings are manufactured to be relatively thin. However, as aircraft wings become thinner, it has become increasingly difficult to package different components into aircraft wings. As a non-limiting example, as aircraft wing airfoils get smaller, it has become more difficult to fit linear hydraulic slat actuators into an aircraft wing leading edge. Small aircraft wing airfoils typically require a penetration in a front spar web to accommodate the length of a linear hydraulic slat actuator. However, in these scenarios, actuator displacement is severely limited.
Document US 4,470,569 A, in accordance with its abstract, states a slat system in which the slats are supported on tracks and the slats are actuated by a simple bell crank linkage oriented so that its plane of motion is parallel to the wing chord reference plane. The mechanism retracts to a collapsed over-center position and extends to an over-center position so as to lock the slat into the retract or extend positions. Each slat segment is driven by two identical mechanisms tied together by a synchronization link which provides redundancy.

### Summary

The present application discloses an aircraft wing according to claim 1 and a method of fabricating an aircraft wing according to claim 10.

Thus, by using the bell-crank to move the actuator output link in a chordwise direction, which differs from the spanwise movement of the linear hydraulic slat actuator, the linear hydraulic slat actuator can be oriented in spanwise direction along the aircraft wing. As a result of the spanwise orientation, the linear hydraulic slat actuator can achieve greater displacement within an aircraft wing architecture while occupying less space in the movement direction of the slat (e.g., the chordwise direction). As a result, penetration of front spar web in the aircraft wing can be bypassed. Additionally, for a fixed displacement linear hydraulic slat actuator, the output displacement of the actuator output link, and thus the attached slat, can be tailored via arm lengths of the bell-crank.

In another aspect, the present application discloses an aircraft. The aircraft includes a fuselage and an aircraft wing attached to the fuselage. The aircraft wing is according to claim 1.

The foregoing summary is illustrative only and is not intended to be in any way limiting. In addition to the illustrative aspects, embodiments, and features described above, further aspects, embodiments, and features will become apparent by reference to the figures and the following detailed description.

### Brief Description of the Drawings

A more complete understanding of embodiments of the present application may be derived by referring to the detailed description and claims when considered in conjunction with the following figures, wherein like reference numbers may refer to similar elements throughout the figures. The figures are provided to facilitate understanding of the disclosure without limiting the breadth, scope, scale, or applicability of the disclosure. The drawings are not necessarily made to scale.
Figure 1 illustrates a first view of a portion of an aircraft wing with a spanwise-oriented linear hydraulic slat actuator, according to an exemplary embodiment;
Figure 2 illustrates a second view of the portion of the aircraft wing with the spanwise-oriented linear hydraulic slat actuator, according to an exemplary embodiment;
Figure 3 illustrates a third view of the portion of the aircraft wing with the spanwise-oriented linear hydraulic slat actuator, according to an exemplary embodiment;
Figure 4 illustrates a first view of a portion of a second aircraft wing with a spanwise-oriented linear hydraulic slat actuator, according to an exemplary embodiment;
Figure 5 illustrates a second view of the portion of the second aircraft wing with the spanwise-oriented linear hydraulic slat actuator, according to an exemplary embodiment;
Figure 6 illustrates an actuator output link operable to extend a slat between a retracted position and an extended position based on spanwise movement from a linear hydraulic slat actuator, according to an exemplary embodiment;
Figure 7 illustrates a bell-crank operable to move an actuator output link and a slat in a chordwise direction in response to spanwise movement from a linear hydraulic slat actuator, according to an exemplary embodiment;
Figure 8 illustrates a bell-crank, according to an exemplary embodiment; and
Figure 9 is a flowchart of an example of an implementation of a method, according to an exemplary embodiment.

The figures and the following description illustrate specific exemplary embodiments. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific embodiments or examples described below, but by the claims.

Particular implementations are described herein with reference to the drawings. In the description, common features may be designated by common reference numbers throughout the drawings. In some drawings, multiple instances of a particular type of feature are used. Although these features are physically and/or logically distinct, the same reference number is used for each, and the different instances are distinguished by addition of a letter to the reference number. When the features as a group or a type are referred to herein (e.g., when no particular one of the features is being referenced), the reference number is used without a distinguishing letter. However, when one particular feature of multiple features of the same type is referred to herein, the reference number is used with the distinguishing letter. For example, linear hydraulic slat actuator are illustrated and associated with reference number 104. When referring to a particular one of the linear hydraulic slat actuator, such as the linear hydraulic slat actuator 104A, the distinguishing letter "A" is used. However, when referring to any arbitrary one of the linear hydraulic slat actuator or to the linear hydraulic slat actuator as a group, the reference number 104 may be used without a distinguishing letter.

As used herein, various terminology is used for the purpose of describing particular implementations only and is not intended to be limiting. For example, the terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

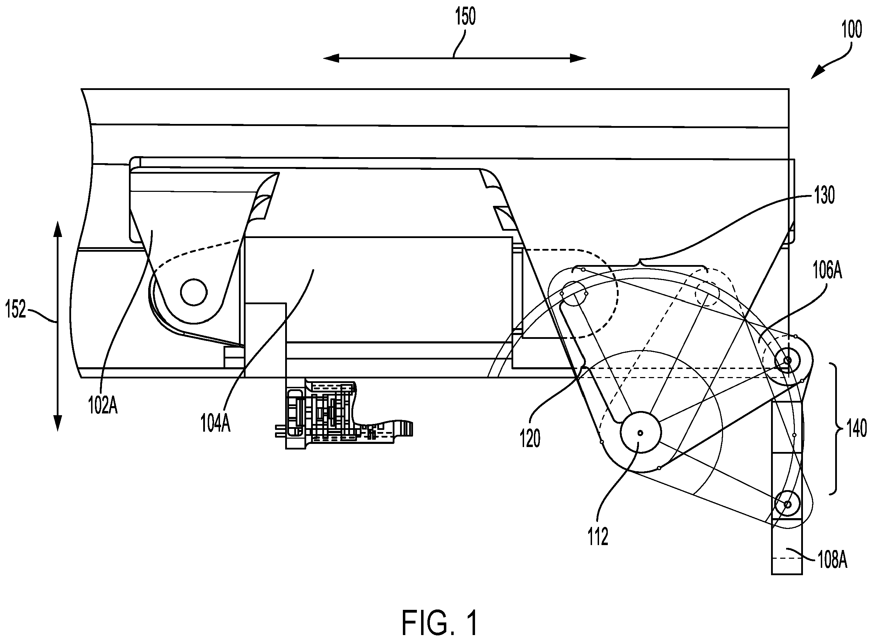

Referring to Figure 1, a first view of a portion of an aircraft wing 100 with a spanwise-oriented linear hydraulic slat actuator is illustrated, in accordance with an exemplary embodiment.

The aircraft wing 100 includes a fixed structure 102A. In Figure 1, the fixed structure 102A corresponds to a support rib. However, in other embodiments, the fixed structure 102A can correspond to a front spar or a beam. A linear hydraulic slat actuator 104A is attached to the fixed structure 102A. The linear hydraulic slat actuator 104A is oriented spanwise 150 along the aircraft wing 100. For example, the linear hydraulic slat actuator 104A is oriented in such a manner that a first end of the linear hydraulic slat actuator 104A is pointing towards a fuselage, and a second end of the linear hydraulic slat actuator 104A is pointing towards a wing tip of the aircraft wing 100.

A bell-crank 106A is coupled to the linear hydraulic slat actuator 104A and to an actuator output link 108A. In the embodiment illustrated in Figure 1, the fixed structure 102A is also coupled to the bell-crank 106A. In the embodiment illustrated in Figure 1, the fixed structure 102A can correspond to a support rib coupled to a pivot point 112 of the bell-crank 106A and to the linear hydraulic slat actuator 104A.

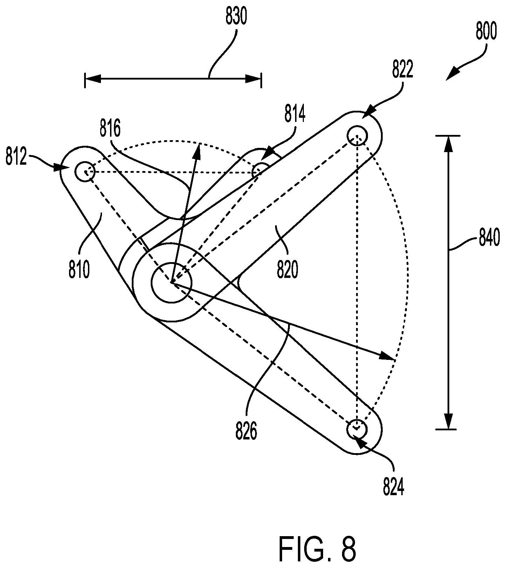

The bell-crank 106A includes a first arm coupled to the linear hydraulic slat actuator 104A and a second arm coupled to the actuator output link 108A. A first length of the first arm defines a first bell-crank radius (e.g., the bell-crank radius 120 in Figure 1), and a second length of the second arm defines a second bell-crank radius (e.g., the bell-crank radius 120). In the embodiment of Figure 1, the first length of the first arm is similar to (e.g., equal to) the second length of the second arm, thus the first bell-crank radius is similar to the second bell-crank radius. However, in other embodiments, as described with respect to Figure 8, the first bell-crank radius can be different from the second bell-crank radius.

An input stroke length 130 associated with the linear hydraulic slat actuator 104A is based on the first bell-crank radius (e.g., the bell-crank radius 120 in Figure 1). The input stroke length 130 corresponds to a distance the linear hydraulic slat actuator 104A travels (e.g., expands or compresses). An output stroke length 140 associated with the actuator output link 108A is based on the second bell-crank radius (e.g., the bell-crank radius 120 in Figure 1). The output stroke length 140 corresponds to a distance the actuator output link 108A travels (e.g., moves). In some embodiments, as described in greater detail with respect to Figure 8, the second bell-crank radius is greater than the first bell-crank radius, which results in the output stroke length 140 being greater than the input stroke length 130. In these embodiments, a smaller output stroke would result in a large linear hydraulic slat actuator movement, which in turn would cause a smaller slat movement.

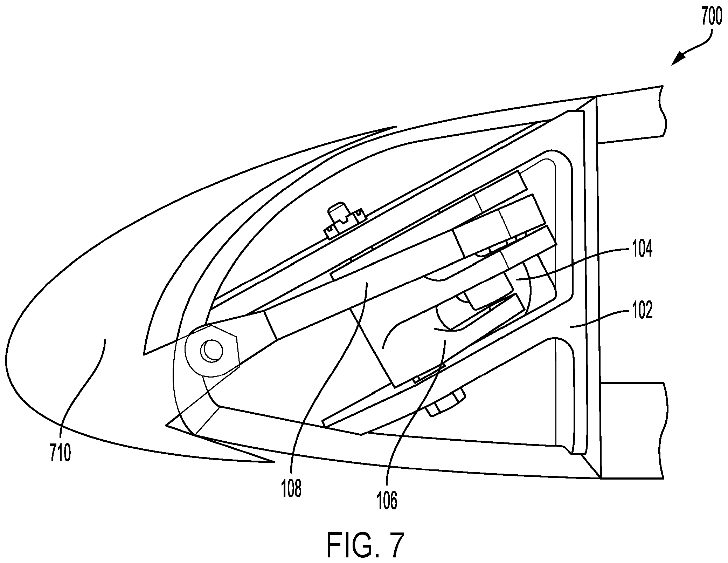

In response to spanwise 150 movement of the linear hydraulic slat actuator 104A, the bell-crank 106A is configured to move the actuator output link 108A in a different direction (i.e., a chordwise 152 direction) that enables a slat, such as the slat 710 of Figure 7, attached to the actuator output link 108A to move between a retracted position and an extended position.

Thus, by using the bell-crank 106A to move the actuator output link 108A in a different direction (e.g., the chordwise 152 direction) than the spanwise 150 movement of the linear hydraulic slat actuator 104A, the linear hydraulic slat actuator 104A can be oriented in the spanwise 150 direction along the aircraft wing 100. As a result of the spanwise 150 orientation, the linear hydraulic slat actuator 104A can achieve greater displacement within the aircraft wing 100 while occupying less space in the movement direction of the slat (e.g., the chordwise 152 direction). Additionally, for a fixed displacement linear hydraulic slat actuator 104A, the output displacement of the actuator output link 108A, and thus the attached slat (e.g., the slat 710 of Figure 7), can be tailored via arm lengths of the bell-crank 106A.

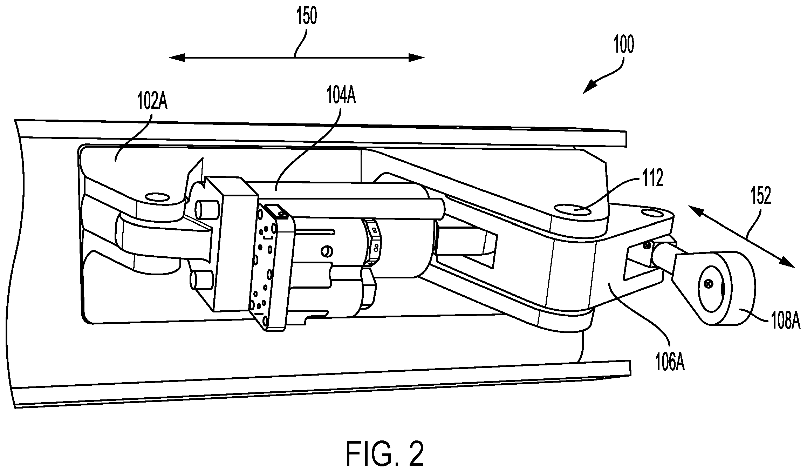

Referring to Figure 2, a second view of the portion of the aircraft wing 100 with the spanwise-oriented linear hydraulic slat actuator is illustrated, in accordance with an exemplary embodiment. In particular, Figure 2 depicts a view from underneath the linear hydraulic slat actuator 104A.

The aircraft wing 100 includes the fixed structure 102A and the linear hydraulic slat actuator 104A attached to the fixed structure 102A. The linear hydraulic slat actuator 104A is oriented spanwise 150 along the aircraft wing 100. The aircraft wing 100 also includes the bell-crank 106A coupled to the linear hydraulic slat actuator 104A and to the actuator output link 108A.

In response to spanwise 150 movement of the linear hydraulic slat actuator 104A, the bell-crank 106A can be configured to move the actuator output link 108A in a different direction (e.g., a chordwise 152 direction) that enables the slat 710 (Figure 7) attached to the actuator output link 108A to move between a retracted position and an extended position.

Thus, by using the bell-crank 106A to move the actuator output link 108A in a different direction (e.g., the chordwise 152 direction) than the spanwise 150 movement of the linear hydraulic slat actuator 104A, the linear hydraulic slat actuator 104A can be oriented in the spanwise 150 direction along the aircraft wing 100. As a result of the spanwise 150 orientation, the linear hydraulic slat actuator 104A can achieve greater displacement within the aircraft wing 100 while occupying less space in the movement direction of the slat (e.g., the chordwise 152 direction). Additionally, for a fixed displacement linear hydraulic slat actuator 104A, the output displacement of the actuator output link 108A, and thus the attached slat (e.g., the slat 710 of Figure 7), can be tailored via arm lengths of the bell-crank 106A.

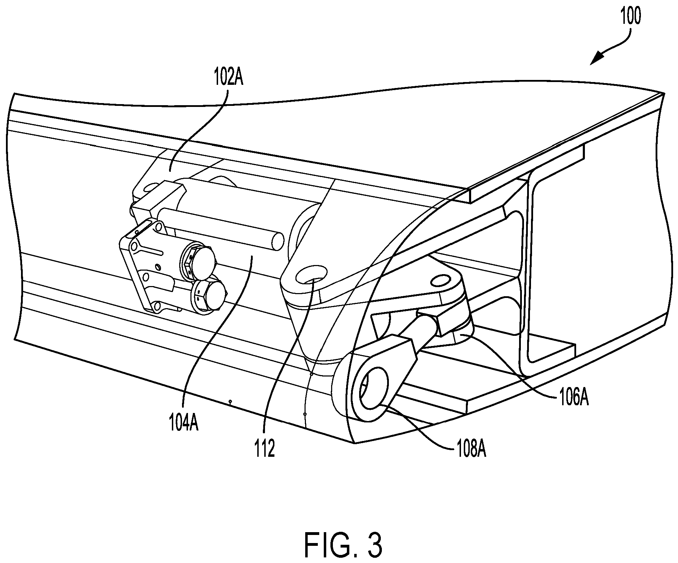

Referring to Figure 3, a third view of the portion of the aircraft wing 100 with the spanwise-oriented linear hydraulic slat actuator is illustrated, in accordance with an exemplary embodiment. In particular, Figure 3 depicts a side view of the actuator output link 108A.

In a similar manner as described with respect to Figures 1-2, in response to spanwise 150 movement of the linear hydraulic slat actuator 104A, the bell-crank 106A can be configured to move the actuator output link 108A in a different direction (e.g., a chordwise 152 direction) that enables a slat (not shown) attached to the actuator output link 108A to move between a retracted position and an extended position.

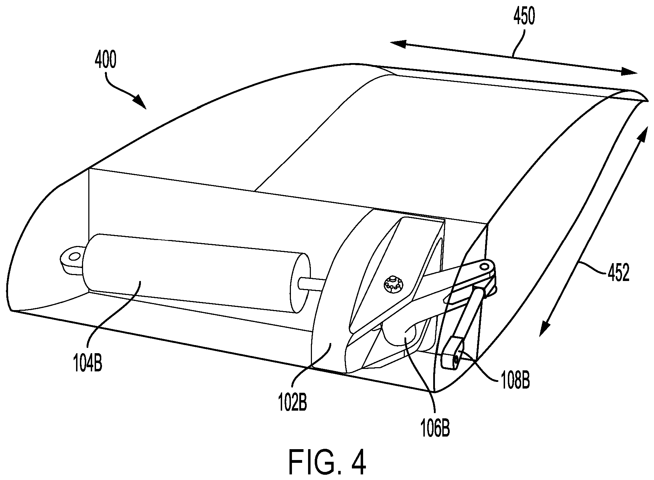

Referring to Figure 4, a first view of a portion of an aircraft wing 400 with a spanwise-oriented linear hydraulic slat actuator is illustrated, in accordance with an exemplary embodiment.

The aircraft wing 400 includes a fixed structure 102B. In Figure 4, the fixed structure 102B corresponds to a support rib for a bell-crank 106B. A linear hydraulic slat actuator 104B is oriented spanwise 450 along the aircraft wing 400. For example, the linear hydraulic slat actuator 104B is oriented in such a manner that a first end of the linear hydraulic slat actuator 104B is pointing towards a fuselage, and a second end of the linear hydraulic slat actuator 104B is pointing towards a wing tip of the aircraft wing 400.

The bell-crank 106B is coupled to the linear hydraulic slat actuator 104A and to an actuator output link 108B. In response to spanwise 450 movement of the linear hydraulic slat actuator 104B, the bell-crank 106B is configured to move the actuator output link 108B in a different direction (i. e., a chordwise 452 direction) that enables a slat, such as the slat 710 of Figure 7, attached to the actuator output link 108B to move between a retracted position and an extended position.

Thus, by using the bell-crank 106B to move the actuator output link 108B in a different direction (e.g., the chordwise 452 direction) than the spanwise 450 movement of the linear hydraulic slat actuator 104B, the linear hydraulic slat actuator 104B can be oriented in the spanwise 450 direction along the aircraft wing 400. As a result of the spanwise 450 orientation, the linear hydraulic slat actuator 104B can achieve greater displacement within the aircraft wing 400 while occupying less space in the movement direction of the slat (e.g., the chordwise 452 direction).

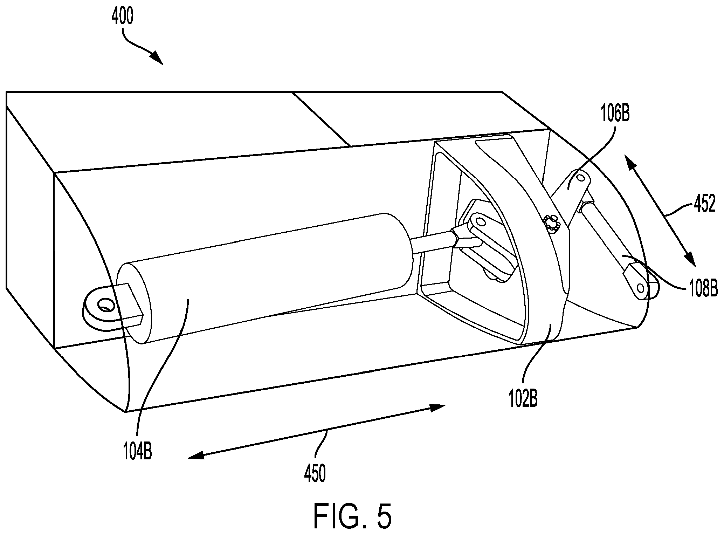

Referring to Figure 5, a second view of the portion of the aircraft wing 400 with the spanwise-oriented linear hydraulic slat actuator is illustrated, in accordance with an exemplary embodiment. In particular, Figure 5 depicts a side view of the actuator output link 108B.

In a similar manner as described with respect to Figure 4, in response to spanwise 450 movement of the linear hydraulic slat actuator 104B, the bell-crank 106B is configured to move the actuator output link 108B in a different direction (i. e., a chordwise 452 direction) that enables a slat (not shown) attached to the actuator output link 108B to move between a retracted position and an extended position.

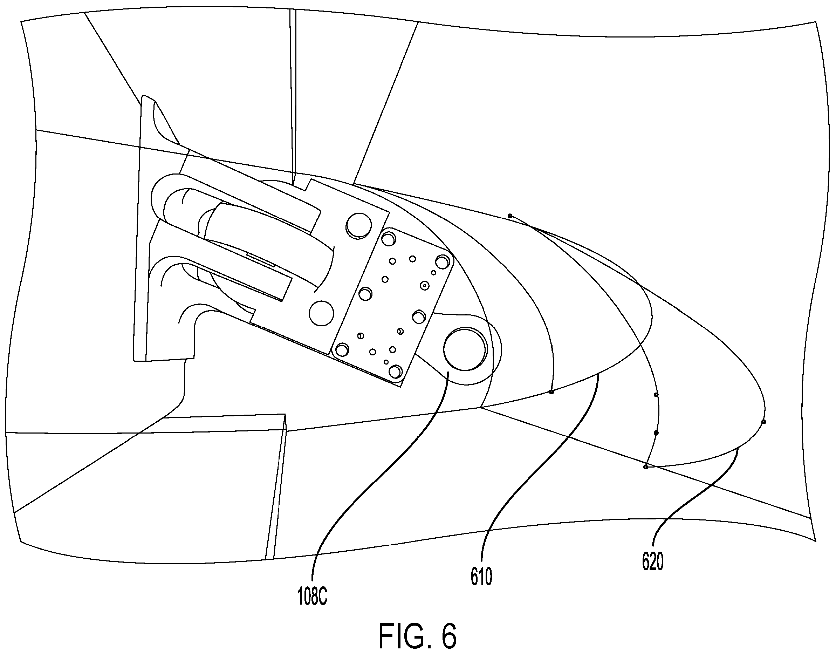

Referring to Figure 6, an actuator output link 108C operable to extend a slat between a retracted position and an extended position based on spanwise movement from a linear hydraulic slat actuator is illustrated, in accordance with an exemplary embodiment.

In some embodiments, the actuator output link 108C can correspond to the actuator output link 108A. For example, in some embodiments, the actuator output link 108C can be coupled to the bell-crank 106A and, in response to spanwise 150 movement of the linear hydraulic slat actuator 104A, the bell-crank 106A is configured to move the actuator output link 108C in a different direction (i. e., a chordwise 152 direction) that enables a slat attached to the actuator output link 108C to move between a retracted position 610 and an extended position 620. In other embodiments, the actuator output link 108C can correspond to the actuator output link 108B. For example, in some embodiments, the actuator output link 108C is coupled to the bell-crank 106B and, in response to spanwise 450 movement of the linear hydraulic slat actuator 104B, the bell-crank 106B is configured to move the actuator output link 108C in a different direction (i. e., a chordwise 452 direction) that enables a slat attached to the actuator output link 108C to move between the retracted position 610 and the extended position 620.

Referring to Figure 7, a bell-crank operable to move an actuator output link and a slat in a chordwise direction in response to spanwise movement from a linear hydraulic slat actuator is illustrated, in accordance with an exemplary embodiment.

In Figure 7, an aircraft wing 700 includes a fixed structure 102 (e.g., a support rib) and a linear hydraulic slat actuator 104. In some embodiments, the linear hydraulic slat actuator 104 can correspond to the linear hydraulic slat actuator 104A or the linear hydraulic slat actuator 104B. The linear hydraulic slat actuator 104 is oriented spanwise along the aircraft wing 700.

A bell-crank 106 is coupled to the linear hydraulic slat actuator 104 and to the actuator output link 108. In the embodiment illustrated in Figure 7, the fixed structure 102 is also coupled to the bell-crank 106. In the embodiment illustrated in Figure 7, the fixed structure 102 can correspond to a support rib coupled to a pivot point of the bell-crank 106.

In response to spanwise movement of the linear hydraulic slat actuator 104, the bell-crank 106 is configured to move the actuator output link 108 in a different direction (i. e., a chordwise direction) that enables the slat 710 attached to the actuator output link 108C to move between the retracted position 610 and the extended position 620.

Thus, by using the bell-crank 106 to move the actuator output link 108C in a different direction (i. e., the chordwise direction) than the spanwise movement of the linear hydraulic slat actuator 104, the linear hydraulic slat actuator 104 can be oriented in the spanwise direction along the aircraft wing 700. As a result of the spanwise orientation, the linear hydraulic slat actuator 104 can achieve greater displacement within the aircraft wing 700 while occupying less space in the movement direction of the slat (e.g., the chordwise direction). Additionally, for a fixed displacement linear hydraulic slat actuator 104, the output displacement of the actuator output link 108C, and thus the attached slat 710, can be tailored via arm lengths of the bell-crank 106.

Referring to Figure 8, a bell-crank 800 is illustrated, in accordance with an exemplary embodiment. The bell-crank 800 can correspond to the bell-crank 106A, the bell-crank 106B, or the bell-crank 106.

The bell-crank 800 includes a first arm 810 and a second arm 820. The first arm 810 can be coupled to a linear hydraulic slat actuator, such as the linear hydraulic slat actuator 104A, the linear hydraulic slat actuator 104B, or the linear hydraulic slat actuator 104. The second arm 820 can be coupled to an actuator output link, such as the actuator output link 108A, the actuator output link 108B, or the actuator output link 108C. The first arm 810 can be configured to move from a first position 812 to a second position 814 in response to spanwise movement of the linear hydraulic slat actuator, and the second arm 820 can be configured to move from a first position 822 to a second position 824 in response to movement from the first arm 810. For example, when the first arm 810 is in the first position 812, the second arm 820 is in the first position 822. However, when the first arm 810 is in the second position 814, the second arm 820 is in the second position 824.

A first length of the first arm 810 defines a first bell-crank radius 816, and a second length of the second arm 820 defines a second bell-crank radius 826. An input stroke length 830 associated with the hydraulic slat actuator is based on the first bell-crank radius 816, and an output stroke length 840 associated with the actuator output link is based on the second bell-crank radius 826.

The input stroke length 830 corresponds to a distance the linear hydraulic slat actuator 104 travels, and the output stroke length corresponds to a distance the actuator output link 108 travels. As illustrated in Figure 8, the second bell-crank radius 826 is greater than the first bell-crank radius 816, which results in the output stroke length 840 being greater than the input stroke length 830. As a result, small movement from the linear hydraulic actuator 104 can result in a larger movement from the actuator output link 108. Thus, for a fixed displacement linear hydraulic slat actuator 104, the output displacement of the actuator output link 108, and thus the attached slat 710, can be tailored via arm lengths of the arm 810, 820 of the bell-crank 800.

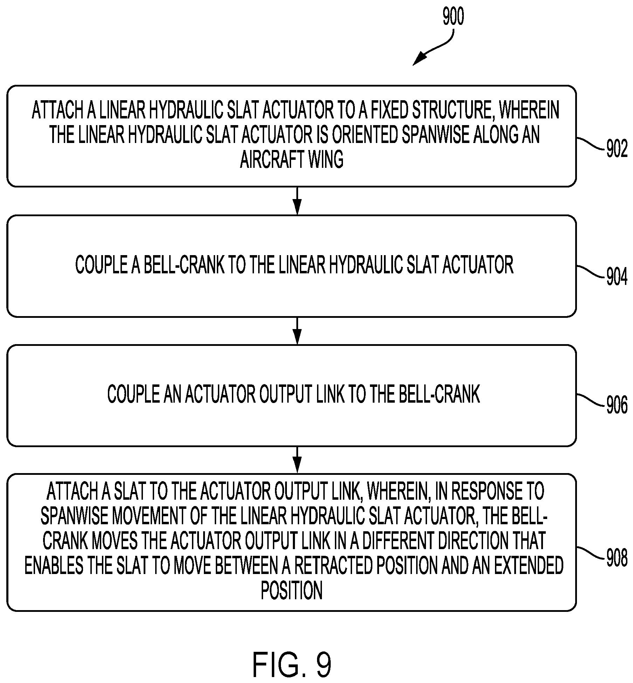

Figure 9 illustrates a flow chart of a method 900, according to an exemplary embodiment.

The method 900 includes attaching a linear hydraulic slat actuator to a fixed structure, at block 902. The linear hydraulic slat actuator is oriented spanwise along an aircraft wing. For example, referring to Figure 1, the linear hydraulic slat actuator 104A is attached to the fixed structure 102A. The linear hydraulic slat actuator 104A is oriented spanwise 150 along the aircraft wing 100.

The method 900 also includes coupling a bell-crank to the linear hydraulic slat actuator, at block 904. For example, referring to Figure 1, the bell-crank 106A is coupled to the linear hydraulic slat actuator 104A.

The method 900 also includes coupling an actuator output link to the bell-crank, at block 906. For example, referring to Figure 1, the actuator output link 108A is coupled to the bell-crank 106A.

The method 900 also includes attaching a slat to the actuator output link, at block 908. In response to spanwise movement of the linear hydraulic slat actuator, the bell-crank moves the actuator output link in a different direction that enables the slat to move between a retracted position and an extended position. For example, referring to Figure 7, the slat 710 is attached to the actuator output link 108C. In response to spanwise 150, 450 movement of the linear hydraulic slat actuator 104A, 104B, the bell-crank 106A, 106B is configured to move the actuator output link 108A, 108B, 108C in a different direction (i. e., a chordwise 152 direction) that enables the slat 710 attached to the actuator output link 108A, 108B, 108C to move between the retracted position 610 and the extended position 620. Thus, the linear hydraulic slat actuator 104A, 104B drives the bell-crank 106A, 106B.

According to one implementation of the method 900, the linear hydraulic slat actuator 104A, 104B is coupled to a first arm 810 of the bell-crank 106A, 106B, 800, and the actuator output link 108A, 108B, 108C is coupled to a second arm 820 of the bell-crank 106A, 106B, 800. A first length of the first arm 810 defines a first bell-crank radius 816, and a second length of the second arm 820 defines a second bell-crank radius 826.

According to one implementation of the method 900, an input stroke length 130, 830 associated with the linear hydraulic slat actuator 104A, 104B is based on the first bell-crank radius 816, and an output stroke length 140, 840 associated with the actuator output link 108A, 108B, 108C is based on the second bell-crank radius 826.

According to one implementation of the method 900, the first bell-crank radius is similar to the second bell-crank radius. According to one implementation of the method 900, the first bell-crank radius 816 is different than the second bell-crank radius 826. As a non-limiting example, the second bell-crank radius 826 is greater than the first bell-crank radius 816. According to another example, the second bell-crank radius 826 can be smaller than the first bell-crank radius 816.

Thus, by using the bell-crank 106A, 106B, 800 to move the actuator output link 108A, 108B, 108C in a different direction (i. e., the chordwise 152, 452 direction) than the spanwise 150, 450 movement of the linear hydraulic slat actuator 104A, 104B, the linear hydraulic slat actuator 104A, 104B can be oriented in the spanwise 150, 450 direction along the aircraft wing 100, 400. As a result of the spanwise 150, 450 orientation, the linear hydraulic slat actuator 104A, 104B can achieve greater displacement within the aircraft wing 100, 400 while occupying less space in the movement direction of the slat 710 (e.g., the chordwise 152, 452 direction). Additionally, for a fixed displacement linear hydraulic slat actuator 104A, 104B, the output displacement of the actuator output link 108A, 108B, 108C, and thus the attached slat 710, can be tailored via arm lengths of the bell-crank 106A.

Although the systems are described herein with specific reference to aircraft systems or aerospace vehicles, in other embodiments, the system can be a vehicle other than an aircraft without departing from the essence of the present disclosure.

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other, but having one or more additional elements between the coupled elements. Further, as used herein, securing one element to another element can include direct securing and indirect securing. Additionally, as used herein, "adjacent" does not necessarily denote contact. For example, one element can be adjacent another element without being in contact with that element.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The flow chart diagrams included herein are generally set forth as logical flow chart diagrams. As such, the depicted order and labeled steps are indicative of one embodiment of the presented method. Additionally, the format and symbols employed are provided to explain the logical steps of the method and are understood not to limit the scope of the method. Although various arrow types and line types may be employed in the flow chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or highernumbered item.

While the systems and methods of operation have been described with reference to certain examples, it will be understood by those skilled in the art that various changes can be made without departing from the scope of the claims. Therefore, it is intended that the present methods and systems not be limited to the particular examples disclosed, but that the disclosed methods and systems include all embodiments falling within the scope of the appended claims.

## Claims

1. An aircraft wing (100) comprising:
a fixed structure (102);
a linear hydraulic slat actuator (104) attached to the fixed structure (102), wherein the linear hydraulic slat actuator (104) is oriented spanwise along the aircraft wing (100);
an actuator output link (108A);
a slat (710) attached to the actuator output link (108); and
a bell-crank (106) having a pivot point (112), and coupled to the linear hydraulic slat actuator (104) and to the actuator output link (108A), wherein, in response to spanwise movement of the linear hydraulic slat actuator (104), the bell-crank (106) is configured to rotate about a pivot point (112) to move the actuator output link (108A) along an output stroke length (140) in a chordwise direction (152) that enables the slat (710) to move between a retracted
position (610) and an extended position (620).

2. The aircraft wing (100) of claim 1, wherein the bell-crank (106) comprises:
a first arm (810) coupled to the linear hydraulic slat actuator (104), wherein a first length of the first arm (810) defines a first bell-crank radius (816); and
a second arm (820) coupled to the actuator output link (108A), wherein a second length of the second arm (820) defines a second bell-crank radius (826).

3. The aircraft wing (100) of claim 2, wherein the first bell-crank radius (816) is similar to the second bell-crank radius (826).

4. The aircraft wing (100) of claim 2, wherein the first bell-crank radius (816) is different than the second bell-crank radius (826).

5. The aircraft wing (100) of claim 4, wherein alternatively:
- the second bell-crank radius (826) is greater than the first bell-crank radius (816); or
- the second bell-crank radius (826) is smaller than the first bell-crank radius (816).

6. The aircraft wing (100) of any one of claims 1 to 5, wherein the linear hydraulic slat actuator (104) drives the bell-crank (106).

7. The aircraft wing (100) of any one of claims 1 to 6, further comprising a support rib coupled to the pivot point of the bell-crank (106).

8. The aircraft wing (100) of claim 7, wherein the support rib is further coupled to the linear hydraulic slat actuator (104), wherein the support rib corresponds to the fixed structure (102).

9. The aircraft wing (100) of any one of claims 1 to 7, wherein the fixed structure corresponds to a front spar, a beam, or a support rib.

10. A method (900) of fabricating an aircraft wing (100), the method (900) comprising:
attaching (902) a linear hydraulic slat actuator (104) to a fixed structure (102) of the aircraft wing (100), wherein the linear hydraulic slat actuator (104) is oriented spanwise along the aircraft wing (100);
coupling (904) a bell-crank (106) to the linear hydraulic slat actuator (104), the bell-crank (106) having a pivot point (112);
coupling (906) an actuator output link (108A) to the bell-crank (106); and
attaching (908) a slat (710) to the actuator output link (108A), wherein, in response to spanwise movement of the linear hydraulic slat actuator (108A), the bell-crank (106) rotates about the pivot point (112) and moves the actuator output link (108A) along an output stroke length (140) in a chordwise direction (152) that enables the slat (710) to move between a
retracted position (610) and an extended position (620).

11. The method (900) of claim 10, wherein the linear hydraulic slat actuator (104) is coupled to a first arm (810) of the bell-crank (106), and wherein the actuator output link (108A) is coupled to a second arm (820) of the bell-crank (106), wherein a first length of the first arm (810) defines a first bell-crank radius (816), and wherein a second length of the second arm (820) defines a second bell-crank radius (826).

12. The method (900) of claim 11, wherein the first bell-crank radius (816) is similar to the second bell-crank radius (826).

13. The method (900) of claim 11, wherein the first bell-crank radius (816) is different than the second bell-crank radius (826), preferably wherein the second bell-crank radius (826) is greater than the first bell-crank radius (816).

14. The method (900) of any one of claims 10 to 13, wherein the linear hydraulic slat actuator (104) drives the bell-crank (106).

15. An aircraft comprising:
a fuselage; and
an aircraft wing (100) attached to the fuselage, the aircraft wing (100) being according to any one of claims 1 to 9.

## Patentansprüche

1. Luftfahrzeugtragfläche (100), die aufweist:
eine feste Struktur (102);
einen linearen hydraulischen Vorflügelaktuator (104), der an der festen Struktur (102) angebracht ist, wobei der lineare hydraulische Vorflügelaktuator (104) in Spannweitenrichtung entlang der Luftfahrzeugtragfläche (100) ausgerichtet ist;
ein Aktuator-Ausgangsglied (108A);
einen Vorflügel (710), der an dem Aktuator-Ausgangsglied (108) angebracht ist; und
einen Winkelhebel (106), der einen Drehpunkt (112) aufweist und der an den linearen hydraulischen Vorflügelaktuator (104) und an den Aktuator-Ausgangsglied (108A) gekoppelt ist, wobei, als Reaktion auf eine Bewegung des linearen hydraulischen Vorflügelaktuators (104) in Spannweitenrichtung der Winkelhebel (106) so eingerichtet ist, dass er sich um einen Drehpunkt (112) dreht, um das Aktuator-Ausgangsglied (108A) entlang einer Ausgangshublänge (140) in einer Sehnenrichtung (152) zu bewegen, die es dem Vorflügel (710) ermöglicht, sich zwischen einer zurückgezogenen Position (610) und einer ausgefahrenen Position (620) zu bewegen.

2. Luftfahrzeugtragfläche (100) nach Anspruch 1, wobei der Winkelhebel (106) aufweist:
einen ersten Arm (810), der an den linearen hydraulischen Vorflügelaktuator (104) gekoppelt ist, wobei eine erste Länge des ersten Arms (810) einen ersten Winkelhebelradius (816) definiert; und
einen zweiten Arm (820), der an das Aktuator-Ausgangsglied (108A) gekoppelt ist, wobei eine zweite Länge des zweiten Arms (820) einen zweiten Winkelhebelradius (826) definiert.

3. Luftfahrzeugtragfläche (100) nach Anspruch 2, wobei der erste Winkelhebelradius (816) ähnlich dem zweiten Winkelhebelradius (826) ist.

4. Luftfahrzeugtragfläche (100) nach Anspruch 2, wobei der erste Winkelhebelradius (816) sich von dem zweiten Winkelhebelradius (826) unterscheidet.

5. Luftfahrzeugtragfläche (100) nach Anspruch 4, wobei alternativ:
der zweite Winkelhebelradius (826) größer als der erste Winkelhebelradius (816) ist; oder
der zweite Winkelhebelradius (826) kleiner als der erste Winkelhebelradius (816) ist.

6. Luftfahrzeugtragfläche (100) nach einem der Ansprüche 1 bis 5, wobei der lineare hydraulische Vorflügelaktuator (104) den Winkelhebel (106) antreibt.

7. Luftfahrzeugtragfläche (100) nach einem der Ansprüche 1 bis 6, die ferner eine Stützrippe aufweist, die an den Drehpunkt des Winkelhebels (106) gekoppelt ist.

8. Luftfahrzeugtragfläche (100) nach Anspruch 7, wobei die Stützrippe ferner an den linearen hydraulischen Vorflügelaktuator (104) gekoppelt ist, wobei die Stützrippe der festen Struktur (102) entspricht.

9. Luftfahrzeugtragfläche (100) nach einem der Ansprüche 1 bis 7, wobei die feste Struktur einer Vorderseite eines Holms, einem Träger oder einer Stützrippe entspricht.

10. Verfahren (900) zur Herstellung einer Luftfahrzeugtragfläche (100), wobei das Verfahren (900) aufweist:
Anbringen (902) eines linearen hydraulischen Vorflügelaktuators (104) an einer festen Struktur (102) der Luftfahrzeugtragfläche (100), wobei der lineare hydraulische Vorflügelaktuator (104) in Spannweitenrichtung entlang der Luftfahrzeugtragfläche (100) ausgerichtet ist;
Koppeln (904) eines Winkelhebels (106) an den linearen hydraulischen Vorflügelaktuator (104), wobei der Winkelhebel (106) einen Drehpunkt (112) aufweist;
Koppeln (906) eines Aktuator-Ausgangsglieds (108A) an den Winkelhebel (106); und
Anbringen (908) eines Vorflügels (710) an dem Aktuator-Ausgangsglied (108A), wobei, als Reaktion auf eine Bewegung des linearen hydraulischen Vorflügelaktuators (104) in Spannweitenrichtung, der Winkelhebel (106) sich um den Drehpunkt (112) dreht und das Aktuator-Ausgangsglied (108A) entlang einer Ausgangshublänge (140) in einer Sehnenrichtung (152) bewegt, was es dem Vorflügel (710) ermöglicht, sich zwischen einer zurückgezogenen Position (610) und einer ausgefahrenen Position (620) zu bewegen.

11. Verfahren (900) nach Anspruch 10, wobei der lineare hydraulische Vorflügelaktuator (104) an einen ersten Arm (810) des Winkelhebels (106) gekoppelt ist, und wobei das Aktuator-Ausgangsglied (108A) an einen zweiten Arm (820) des Winkelhebels (106) gekoppelt ist, wobei eine erste Länge des ersten Arms (810) einen ersten Winkelhebelradius (816) definiert, und wobei eine zweite Länge des zweiten Arms (820) einen zweiten Winkelhebelradius (826) definiert.

12. Verfahren (900) nach Anspruch 11, wobei der erste Winkelhebelradius (816) ähnlich dem zweiten Winkelhebelradius (826) ist.

13. Verfahren (900) nach Anspruch 11, wobei der erste Winkelhebelradius (816) verschieden von dem zweiten Winkelhebelradius (826) ist, vorzugsweise wobei der zweite Winkelhebelradius (826) größer als der erste Winkelhebelradius (816) ist.

14. Verfahren (900) nach einem der Ansprüche 10 bis 13, wobei der lineare hydraulische Vorflügelaktuator (104) den Winkelhebel (106) antreibt.

15. Luftfahrzeug, das aufweist:
einen Rumpf; und
eine Luftfahrzeugtragfläche (100), die an dem Rumpf angebracht ist, wobei die Luftfahrzeugtragfläche (100) nach einem der Ansprüche 1 bis 9 ausgebildet ist.

## Revendications

1. Aile d'aéronef (100) comprenant :
une structure fixe (102) ;
un actionneur de bec hydraulique linéaire (104) fixé à la structure fixe (102), dans laquelle l'actionneur de bec hydraulique linéaire (104) est orienté dans le sens de l'envergure le long de l'aile d'aéronef (100) ;
une biellette de sortie d'actionneur (108A) ;
un bec (710) fixé à la biellette de sortie d'actionneur (108) ; et
un levier coudé (106) ayant un point de pivot (112), et couplé à l'actionneur de bec hydraulique linéaire (104) et à la biellette de sortie d'actionneur (108A), dans laquelle, en réponse à un mouvement dans le sens de l'envergure de l'actionneur de bec hydraulique linéaire (104), le levier coudé (106) est configuré pour tourner autour d'un point de pivot (112) pour déplacer la biellette de sortie d'actionneur (108A) le long d'une longueur de course de sortie (140) dans une direction de corde (152) qui permet au bec (710) de se déplacer entre une position rétractée (610) et une position étendue (620).

2. L'aile d'aéronef (100) selon la revendication 1, dans laquelle le levier coudé (106) comprend :
un premier bras (810) couplé à l'actionneur de bec hydraulique linéaire (104), dans laquelle une première longueur du premier bras (810) définit un premier rayon de levier coudé (816) ; et
un second bras (820) couplé à la biellette de sortie d'actionneur (108A), dans laquelle une seconde longueur du second bras (820) définit un second rayon de levier coudé (826).

3. L'aile d'aéronef (100) selon la revendication 2, dans laquelle le premier rayon de levier coudé (816) est similaire au second rayon de levier coudé (826).

4. L'aile d'aéronef (100) selon la revendication 2, dans laquelle le premier rayon de levier coudé (816) est différent du second rayon de levier coudé (826).

5. L'aile d'aéronef (100) selon la revendication 4, dans laquelle alternativement :
• le second rayon de levier coudé (826) est supérieur au premier rayon de levier coudé (816) ; ou
• le second rayon de levier coudé (826) est inférieur au premier rayon de levier coudé (816).

6. L'aile d'aéronef (100) selon l'une quelconque des revendications 1 à 5, dans laquelle l'actionneur de bec hydraulique linéaire (104) entraîne le levier coudé (106).

7. L'aile d'aéronef (100) selon l'une quelconque des revendications 1 à 6, comprenant en outre une nervure de support couplée au point de pivot du levier coudé (106).

8. L'aile d'aéronef (100) selon la revendication 7, dans laquelle la nervure de support est couplée en outre à l'actionneur de bec hydraulique linéaire (104), dans laquelle la nervure de support correspond à la structure fixe (102).

9. L'aile d'aéronef (100) selon l'une quelconque des revendications 1 à 7, dans laquelle la structure fixe correspond à un longeron avant, une poutre, ou une nervure de support.

10. Procédé (900) de fabrication d'une aile d'aéronef (100), le procédé (900) comprenant :
la fixation (902) d'un actionneur de bec hydraulique linéaire (104) à une structure fixe (102) de l'aile d'aéronef (100), dans lequel l'actionneur de bec hydraulique linéaire (104) est orienté dans le sens de l'envergure le long de l'aile d'aéronef (100) ;
le couplage (904) d'un levier coudé (106) à l'actionneur de bec hydraulique linéaire (104), le levier coudé (106) ayant un point de pivot (112) ;
le couplage (906) d'une biellette de sortie d'actionneur (108A) au levier coudé (106) ; et
la fixation (908) d'un bec (710) à la biellette de sortie d'actionneur (108A), dans lequel, en réponse à un mouvement dans le sens de l'envergure de l'actionneur de bec hydraulique linéaire (108A), le levier coudé (106) tourne autour du point de pivot (112) et déplace la biellette de sortie d'actionneur (108A) le long d'une longueur de course de sortie (140) dans une direction de corde (152) qui permet au bec (710) de se déplacer entre une position rétractée (610) et une position étendue (620).

11. Le procédé (900) selon la revendication 10, dans lequel l'actionneur de bec hydraulique linéaire (104) est couplé à un premier bras (810) du levier coudé (106), et dans lequel la biellette de sortie d'actionneur (108A) est couplée à un second bras (820) du levier coudé (106), dans lequel une première longueur du premier bras (810) définit un premier rayon de levier coudé (816), et dans lequel une seconde longueur du second bras (820) définit un second rayon de levier coudé (826).

12. Le procédé (900) selon la revendication 11, dans lequel le premier rayon de levier coudé (816) est similaire au second rayon de levier coudé (826).

13. Le procédé (900) selon la revendication 11, dans lequel le premier rayon de levier coudé (816) est différent du second rayon de levier coudé (826), de préférence dans lequel le second rayon de levier coudé (826) est supérieur au premier rayon de levier coudé (816).

14. Le procédé (900) selon l'une quelconque des revendications 10 à 13, dans lequel l'actionneur de bec hydraulique linéaire (104) entraîne le levier coudé (106).

15. Aéronef comprenant :
un fuselage ; et
une aile d'aéronef (100) fixée au fuselage, l'aile d'aéronef (100) étant selon l'une quelconque des revendications 1 à 9.
